# EUROPEAN PATENT APPLICATION

(11) **EP 4 844 917 A1**
(43) Date of publication of application: **25.11.2026**
(21) Application number: 24945201.2
(22) Date of filing: 02.08.2024
(51) Int. Cl.: H01M 50/242

(54) **BATTERY AND ELECTRICAL APPARATUS**

(30) Priority: 20.06.2024 CN 202421416623 U
(71) Applicant: Contemporary Amperex Technology Co., Limited, Ningde, Fujian 352100 (CN)
(72) Inventor: TANG, Yu, Ningde, Fujian 352100 (CN); WANG, Wenli, Ningde, Fujian 352100 (CN); YANG, Haiqi, Ningde, Fujian 352100 (CN)
(74) Representative: Lorenz Seidler Gossel Part. mbB
(86) International application number: PCT/CN2024/109652
(87) International publication number: WO 2025/260465

(57) **Abstract**

A battery (100) and an electrical apparatus, belonging to the technical field of batteries. The battery (100) comprises: a case body (10), battery cells (20), and a reinforcing member (30); the case body (10) comprises a first case body (101) and a second case body (102) which cover each other; the first case body (101) and/or the second case body (102) comprises a bottom wall (11) and a surrounding wall (12), the surrounding wall (12) being arranged around the bottom wall (11) and being connected to the bottom wall (11); the surrounding wall (12) comprises a plurality of side walls (121) which are connected end to end in sequence; the battery cells (20) are disposed in the case body (10); the reinforcing member (30) is disposed on the side of the surrounding wall (12) facing and/or facing away from the battery cells (20); at least one side wall (121) is provided with a functional component (40) and the reinforcing member (30), the reinforcing member (30) being at least connected to the surrounding wall (12) and being used for reinforcing the strength of the surrounding wall (12).

## Description

### CROSS-REFERENCE TO RELATED APPLICATIONS

This application claims priority to Chinese Patent Application No. 202421416623.2, filed by Contemporary Amperex Technology Co. Limited on June 20, 2024, which is incorporated herein by reference in its entirety.

### TECHNICAL FIELD

This application relates to the technical field of batteries, and in particular, to a battery and an electric apparatus.

### BACKGROUND

In the related art, a case of a battery has a relatively small wall thickness and relatively low compression resistance. Especially under front-rear compression, high-voltage and low-voltage connectors, heat exchange structures, and the like arranged at the front and rear of the battery are easily damaged, leading to problems such as high-voltage insulation failure or leakage of heat exchange media, which affects the safety of the battery system.

### SUMMARY

Embodiments of this application provide a battery and an electric apparatus, to improve compression resistance of a case of a battery and reduce a risk of high-voltage insulation failure or leakage of heat exchange media.

According to a first aspect, an embodiment of this application provides a battery, including: a case, where the case includes a first case and a second case that fit with each other, the first case and/or the second case includes a bottom wall and a peripheral wall, the peripheral wall is disposed around the bottom wall and connected to the bottom wall, and the peripheral wall includes a plurality of side walls connected end-to-end in sequence; a battery cell, where the battery cell is disposed inside the case; and a reinforcing member, where the reinforcing member is disposed on a side of the peripheral wall facing toward and/or away from the battery cell, at least one side wall is provided with a functional component and the reinforcing member, and the reinforcing member is connected to at least the peripheral wall and configured to improve strength of the peripheral wall.

In the above technical solution, the reinforcing member is disposed on at least one of the side of the peripheral wall facing toward the battery cell and the side facing away from the battery cell to improve the strength of the peripheral wall near the functional component, so that the compression resistance of the case, especially compression resistance of the peripheral wall is improved. In this way, the impact resistance of the battery is improved.

In some embodiments, a connection protrusion extending away from the battery cell is provided on an outer peripheral edge of the first case and/or an outer peripheral edge of the second case, and the reinforcing member includes a first reinforcing member disposed on a side of the peripheral wall facing away from the battery cell.

In the above technical solution, in a direction corresponding to wall thickness of the peripheral wall, spaces occupied by the first reinforcing member and the connection protrusion at least partially overlap. Thus, disposing the first reinforcing member does not additionally increase an overall occupied space of the battery, or only slightly increases the overall occupied space of the battery. In this case, the overall structure of the battery is compact and an envelope space is small.

In some embodiments, a height by which the first reinforcing member protrudes from the peripheral wall is less than or equal to a height by which the connection protrusion protrudes from the peripheral wall.

In the above technical solution, a space on one side of the connection protrusion along an up-down direction is utilized to dispose the first reinforcing member. In a front-rear direction, disposing the first reinforcing member does not increase the overall dimension of the battery in a front-rear direction, and improves the compression resistance of the case without affecting the volume utilization.

In some embodiments, the first reinforcing member defines a first buffer cavity; or the first reinforcing member and the peripheral wall jointly define a first buffer cavity.

In the above technical solution, through the collapse and deformation of the first buffer cavity, an intensity of continuous transmission of the external force is reduced, thereby reducing damage to the case and components such as the battery cell inside the case, and improving the compression resistance of the case.

In some embodiments, the first reinforcing member includes a plurality of first plates and at least one second plate, the second plate is spaced apart from the peripheral wall by a specific distance, and at least two side edges of the second plate are connected to the peripheral wall through the first plates, to define the first buffer cavity between the second plate and the peripheral wall.

In the above technical solution, the structure of the first reinforcing member is simple and easy to process, and in this way, the requirements for improving the structural reinforcement effect and the buffering effect are satisfied.

In some embodiments, the second plate is provided in plurality, the plurality of second plates are arranged along a circumferential direction of the peripheral wall, and edges of the second plate on two sides in the circumferential direction of the peripheral wall are respectively connected to the peripheral wall through the first plates.

In the above technical solution, distribution of the first reinforcing member in the circumferential direction of the peripheral wall is wider. In addition, the plurality of first plates are arranged along the circumferential direction of the peripheral wall, and the plurality of second plates may be arranged along the circumferential direction of the peripheral wall, so that the strength along the circumferential direction of the peripheral wall is enhanced in a larger range, and the effect of improving the overall compression resistance of the case is better.

In some embodiments, the second plate is provided in plurality, the plurality of second plates are arranged along a circumferential direction of the peripheral wall, and the first plates on mutually approaching sides of two adjacent second plates are connected through a connection plate.

In the above technical solution, in the circumferential direction of the peripheral wall, two adjacent second plates are connected through a first plate, a connection plate, and another first plate connected in sequence, forming an integral part. During the processing, a complete sheet plate may be bent multiple times to obtain the connected first plate, second plate, and connection plate, which simplifies the processing and achieves high production efficiency.

In some embodiments, a side edge of the first plate away from the second plate is provided with a connection plate, and the connection plate is connected with the peripheral wall in a manner of surface-to-surface contact.

In the above technical solution, the connected connection plate, first plate, and second plate generally constitute a Z-shaped structure, which enhances strength and provides buffering; and surface-to-surface contact between the connection plate and the peripheral wall increases a connection area to further improve the strength enhancement effect on the peripheral wall.

In some embodiments, at least part of the functional component is located inside the case, the reinforcing member includes a second reinforcing member disposed inside the case, and on a same side wall, a protruding height of the second reinforcing member is not less than a protruding height of the functional component.

In the above technical solution, the second reinforcing member is provided, and then a specific safety space is reserved near the functional component inside the case. When the peripheral wall is deformed by compression, the second reinforcing member contacts other components inside the case before the functional component does. After the second reinforcing member contacts other components and provides a specific buffer against the compression force, the functional component then contacts other components inside the case; or the deformation after buffering is reduced, and then the functional component does not contact and squeeze other components inside the case, thereby greatly alleviating the problem of failure of the functional component caused by deformation under direct compression.

In some embodiments, the functional component includes a high-voltage connector, and the high-voltage connector is disposed on the side wall on a side of the battery cell along a first direction; and the high-voltage connector is connected to the battery cell through an electrical connector; the electrical connector includes a first connection portion located on a side of the battery cell along the first direction and a second connection portion located on a side of the battery cell along a second direction, where the first direction intersects with the second direction; the first connection portion is connected to the high-voltage connector; and the protruding height of the second reinforcing member is not less than a protruding height of the first connection portion.

In the above technical solution, when compression deformation occurs, the second reinforcing member contacts other components inside the case before the first connection portion does, and the first connection portion and a connection position between the first connection portion and the high-voltage connector do not directly bear compression, which helps alleviate the problem of failure of the first connection portion and the connection position caused by deformation.

In some embodiments, the second reinforcing member is connected to the bottom wall and the peripheral wall; and/or an expansion beam is disposed inside the case, and the second reinforcing member is connected to the expansion beam and the peripheral wall.

In the above technical solution, when the second reinforcing member deforms, it is less likely to contact charged components such as the battery cell, the high-voltage connector, the low-voltage connector, and the electrical connector, reducing a risk of short circuit.

In some embodiments, the second reinforcing member defines a second buffer cavity, or the second buffer cavity is defined between the second reinforcing member and the case.

In the above technical solution, the second buffer cavity provides specific buffering to improve the compression resistance of the second reinforcing member, reduce the transmission of compression force, and improve the protective effect on the functional component. Moreover, the second buffer cavity reduces a weight of the second reinforcing member. This reduces the overall weight of the battery while impact resistance is provided.

In some embodiments, the first case and/or the second case is an integrally stamped sheet metal part.

In the above technical solution, the integrally stamped sheet metal part has high production efficiency and low production cost.

In some embodiments, the peripheral wall is locally deformed toward or away from the battery cell to form a reinforcing rib.

In the above technical solution, the reinforcing rib improves the structural strength of the peripheral wall to a certain extent, balancing high production efficiency, low production cost, and strength requirements of the case.

According to a second aspect, an embodiment of this application further provides an electric apparatus, including the battery described above, where the battery is configured to provide electrical energy for the electric apparatus.

### BRIEF DESCRIPTION OF DRAWINGS

FIG. 1 is a schematic diagram of a vehicle provided in an embodiment of this application;
FIG. 2 is an exploded view of a battery provided in an embodiment of this application;
FIG. 3 is a schematic partial structural diagram of a battery provided in some embodiments of this application;
FIG. 4 is a schematic enlarged structural diagram of a circled portion A in FIG. 3;
FIG. 5 is a structural partial schematic diagram of a battery provided in other embodiments of this application;
FIG. 6 is a schematic enlarged structural diagram of a circled portion B in FIG. 5; and
FIG. 7 is a schematic partial structural diagram of a battery provided by still other embodiments of this application.

Reference signs:
vehicle 1000; battery 100; controller 200; motor 300;
case 10; first case 101; second case 102; bottom wall 11; peripheral wall 12; side wall 121; reinforcing rib 122; connection protrusion 13; mounting member 14;
battery cell 20;
reinforcing member 30; first reinforcing member 31; first buffer cavity 311; first plate 312; second plate 313; connection plate 314; second reinforcing member 32; second buffer cavity 321;
functional component 40; high-voltage connector 41; low-voltage connector 42; electrical connector 43; first connection portion 44; and second connection portion 45.

### DESCRIPTION OF EMBODIMENTS

To make the objectives, technical solutions, and advantages of the embodiments of this application clearer, the technical solutions in the embodiments of this application are clearly described below with reference to the drawings in the embodiments of this application. It is clear that the described embodiments are some rather than all embodiments of this application. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those skilled in the art of this application; the terms used in the specification of this application are only for the purpose of describing specific embodiments, and are not intended to limit this application; the terms "include" and "have" and any variations thereof in the specification and claims of this application and the above description of the drawings are intended to cover non-exclusive inclusion. The terms "first", "second", and the like in the specification and claims of this application or in the above drawings are used to distinguish different objects, rather than to describe a specific order or priority relationship.

Reference to "an embodiment" in this application means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that, unless otherwise clearly specified and limited, the terms "mount", "connect", "join", and "attach" should be understood in a broad sense, for example, it may be a fixed connection, a detachable connection, or an integral connection; it may be direct connection, or indirect connection through an intermediate medium, or it may be the internal communication between two elements. For those of ordinary skill in the art, the specific meanings of the above terms in this application may be understood based on specific circumstances.

In this application, the term "and/or" is only an association relationship describing associated objects, representing that three relationships may exist, for example, A and/or B may represent: only A exists, both A and B exist, and only B exists. In addition, the character "/" in this application generally indicates that the associated objects are in an "or" relationship.

In the embodiments of this application, the same reference signs denote the same components, and for the sake of brevity, detailed descriptions of the same components are omitted in different embodiments. It should be understood that the dimensions such as thickness, length, and width of various components in the embodiments of this application shown in the drawings, as well as the overall dimensions such as thickness, length, and width of an integrated apparatus, are only exemplary descriptions, and should not constitute any limitation to this application.

"A plurality of" in this application refers to two or more (including two).

Current market trends indicate that traction batteries are finding ever-broader applications. Traction batteries are not only applied to energy storage power systems such as hydraulic, thermal, wind, and solar power stations, but also widely applied to electric transportation tools such as electric bicycle, electric motorcycle, and electric vehicle, and other fields such as military equipment and aerospace. With the continuous expansion of the application fields of traction batteries, their market demand is also continuously increasing.

In this application, a battery refers to a single physical module including one or more battery cells to provide higher voltage and capacity. For example, the battery mentioned in this application may include a battery module, a battery pack, and the like. Some batteries may include a case for packaging one or more battery cells or a plurality of battery modules. The case prevents liquid or other foreign matters from affecting the charge or discharge of the battery cells.

In some related technologies, a wall thickness of the case is relatively small, and its compression resistance is relatively low. Especially under front-rear compression conditions, high-voltage and low-voltage connectors, heat exchange structures, and the like arranged at the front and rear of the battery are easily damaged, leading to problems such as high-voltage insulation failure or leakage of heat exchange media, which affects the safety of the battery system.

Based on this, this application proposes a battery, including a case, battery cell, and a reinforcing member. The case includes a first case and a second case that fit with each other, and at least one of the first case and the second case includes a bottom wall and a peripheral wall, and the peripheral wall is disposed around the bottom wall and connected to the bottom wall. The battery cell is disposed inside the case, and the reinforcing member is disposed on a side of the peripheral wall facing toward the battery cell, on a side facing away from the battery cell, or on a side facing toward the battery cell and a side facing away from the battery cell. The reinforcing member is connected to at least the peripheral wall and configured to improve a strength of the peripheral wall.

In the battery of the above structure, the reinforcing member is disposed on at least one of the side of the peripheral wall facing toward the battery cell and the side facing away from the battery cell to improve the strength of the peripheral wall, so that the compression resistance of the case, especially compression resistance of the peripheral wall is improved. In this way, the impact resistance of the battery is improved.

The battery disclosed in the embodiments of this application may be used in electric apparatuses using batteries as power sources or various energy storage systems using batteries as energy storage elements. The electric apparatus may be, but is not limited to, a mobile phone, a tablet, a laptop, an electric toy, an electric tool, an electric scooter, an electric vehicle, a ship, a spacecraft, and the like. The electric toy may include fixed or mobile electric toys, such as game console, electric car toy, electric ship toy, electric airplane toy, and the like. The spacecraft may include airplane, rocket, space shuttle, spaceship, and the like.

For convenience of description, an example in which an electric apparatus is a vehicle according to an embodiment of this application is used for description.

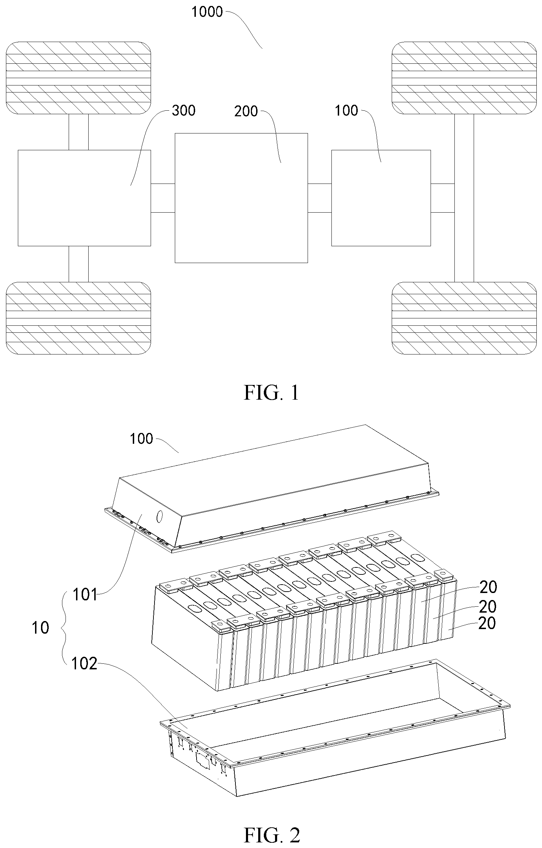

Refer to FIG. 1. FIG. 1 is a schematic diagram of a vehicle 1000 provided in some embodiments of this application. The vehicle 1000 may be a fuel-powered vehicle, a gas vehicle, or a new energy vehicle, and the new energy vehicle may be a pure electric vehicle, a hybrid vehicle, an extended-range vehicle, or the like. A battery 100 is disposed inside the vehicle 1000, and the battery 100 may be disposed at a bottom, head, or tail of the vehicle 1000. The battery 100 may be used for power supply of the vehicle 1000, for example, the battery 100 may serve as an operating power source of the vehicle 1000. The vehicle 1000 may further include a controller 200 and a motor 300, and the controller 200 is used to control the battery 100 to supply power to the motor 300, for example, for the startup, navigation, and driving power demands of the vehicle 1000.

In some embodiments of this application, the battery 100 may serve not only as the operating power source of the vehicle 1000, but also as a driving power source of the vehicle 1000, replacing or partially replacing fuel or natural gas to provide driving power for the vehicle 1000.

Refer to FIG. 2. FIG. 2 is an exploded view of a battery 100 according to some embodiments of this application. The battery 100 includes a case 10 and battery cells 20, the case 10 has an accommodating cavity, and the battery cell 20 is accommodated in the accommodating cavity of the case 10.

The case 10 is used to provide the accommodating cavity for the battery cell 20, and the case 10 may adopt various structures. The case 10 may have various shapes, such as a cylinder or a cuboid.

Each battery cell 20 may include a housing, an electrode assembly, and an electrolyte, and the housing is used to accommodate the electrode assembly and the electrolyte. The electrode assembly is formed by a positive electrode plate, a negative electrode plate, and a separator. Operation of the battery cell 20 mainly relies on movement of metal ions between the positive electrode plate and the negative electrode plate. Poles and the like connected to tabs may be disposed on the housing of the battery cell 20 to serve as electrical connection portion of the battery cell 20.

In the battery 100, a plurality of battery cells 20 may be provided, and the plurality of battery cells 20 may be connected in series, parallel, or series-parallel. The series-parallel connection refers to a combination of series and parallel connections among the plurality of battery cells 20. The plurality of battery cells 20 of the battery 100 may be directly connected in series, in parallel, or in series-parallel to form a battery pack, and then the battery pack is accommodated in the case 10. Certainly, the battery 100 may alternatively be an entirety accommodated in the case 10, which is formed by connecting a plurality of battery packs in series, parallel, or series-parallel, where the battery packs are formed by connecting a plurality of battery cells 20 in series, parallel, or series-parallel. The battery 100 may further include other structures, for example, the battery 100 may further include an electrical connector for realizing electrical connection between the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular, or in other shapes.

Hereinafter, the battery 100 according to the embodiments of this application is described with reference to the drawings.

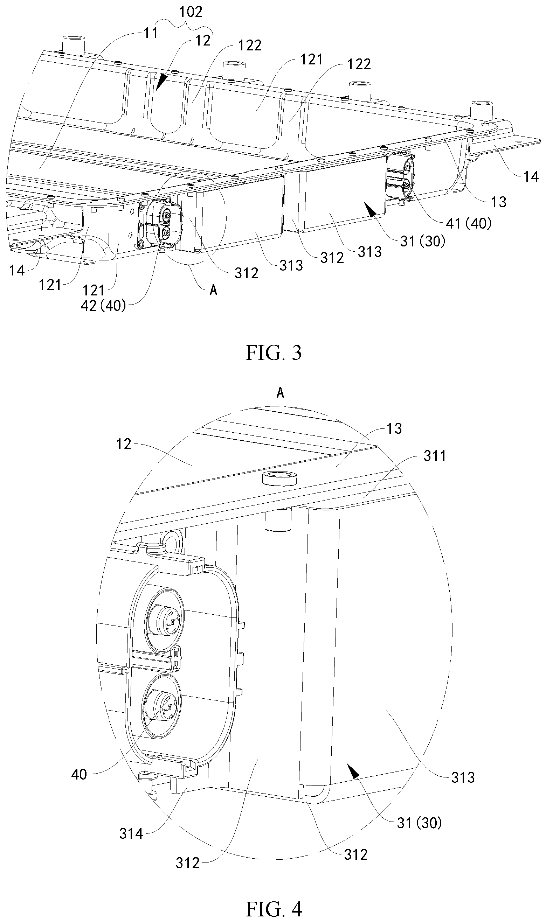

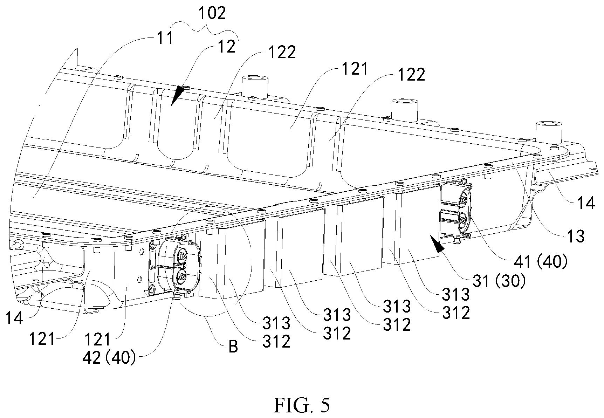

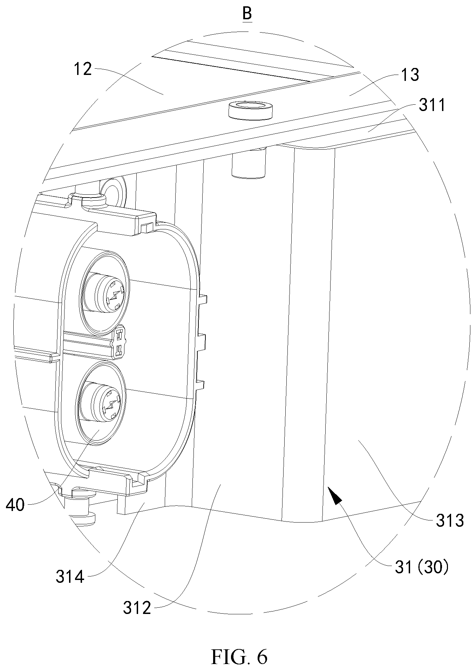

Refer to FIG. 2 to FIG. 7. FIG. 2 is an exploded view of the battery 100 provided in an embodiment of this application; FIG. 3, FIG. 5, and FIG. 7 are schematic partial structural diagrams of a battery 100 provided in different embodiments of this application; FIG. 4 is a schematic enlarged structural diagram of a circled portion A in FIG. 3; and FIG. 6 is a schematic enlarged structural diagram of a circled portion B in FIG. 5. The battery 100 includes: a case 10, a battery cell 20, and a reinforcing member 30.

The case 10 includes a first case 101 and a second case 102 that fit with each other, at least one of the first case 101 and the second case 102 includes a bottom wall 11 and a peripheral wall 12, and the peripheral wall 12 is disposed around the bottom wall 11 and connected to the bottom wall 11. The battery cell 20 is disposed inside the case 10. The reinforcing member 30 is disposed on a side of the peripheral wall 12 facing toward the battery cell 20, or the reinforcing member 30 is disposed on a side of the peripheral wall 12 facing away from the battery cell 20, or the reinforcing member 30 is disposed on a side of the peripheral wall 12 facing toward the battery cell 20 and a side facing away from the battery cell 20. The reinforcing member 30 is connected to at least the peripheral wall 12 and configured to improve the strength of the peripheral wall 12.

The structures of the first case 101 and the second case 102 may be the same or different. For example, in some embodiments, both the second case 102 and the first case 101 include a bottom wall 11 and a peripheral wall 12, both the first case 101 and the second case 102 are hollow structures open on one side, and the open side of the first case 101 covers the open side of the second case 102; in other embodiments, the second case 102 includes a bottom wall 11 and a peripheral wall 12, the second case 102 is a hollow structure open at one end, the first case 101 only includes a bottom wall 11 and does not include a peripheral wall 12, the first case 101 is formed as a cover structure, and the first case 101 covers the open side of the second case 102, so that the first case 101 and the second case 102 jointly define an accommodating cavity; and the like.

In addition, in embodiments where both the first case 101 and the second case 102 include a peripheral wall 12, the reinforcing member 30 may be disposed on only one of the first case 101 and the second case 102, or the reinforcing member 30 may be disposed on both the peripheral wall 12 of the first case 101 and the peripheral wall 12 of the second case 102.

In the following description, for example, the first case 101 is a cover structure, and the second case 102 includes the bottom wall 11 and the peripheral wall 12. Based on the following description, other structures of the first case 101 and the second case 102 are understood by those skilled in the art.

The bottom wall 11 and the peripheral wall 12 of the second case 102 may be integrally formed, or connected by welding, fastener connection, or the like. Moreover, the peripheral wall 12 may be a continuously extending integral part, or the peripheral wall 12 may be spliced from multiple parts. For example, the peripheral wall 12 may include a plurality of side walls 121 connected end-to-end and extending along a circumferential direction of the bottom wall 11, and the plurality of side walls 121 may be integrally formed, or the plurality of side walls 121 may be separate parts connected by welding, fastener connection, or the like.

In some specific embodiments, the second case 102 is an integrally stamped sheet metal part, that is, a complete plate is deformed by sheet metal stamping to form the connected bottom wall 11 and peripheral wall 12 with no connection gap between the bottom wall 11 and the peripheral wall 12. This provides advantages such as low cost, good sealing performance, and low weight.

One or more reinforcing members 30 may be provided. Moreover, a position of the reinforcing member 30 may be flexibly set as needed. For example, the reinforcing member 30 may be disposed only on the side of the peripheral wall 12 facing toward the battery cell 20 (that is, an inner side of the peripheral wall 12), and in this case, space outside the case 10 is not occupied and an overall occupied space of the battery 100 is not affected; or the reinforcing member 30 may be disposed only on the side of the peripheral wall 12 facing away from the battery cell 20 (that is, an outer side of the peripheral wall 12), and in this case, the arrangement of the battery cell 20 inside the case 10 is not affected, and when the case 10 is subjected to external impact such as compression and collision, the reinforcing member 30 contacts an impact source before the peripheral wall 12, resulting in a better effect of reducing damage to the case 10; or the reinforcing members 30 may be disposed on both the inner side and the outer side of the peripheral wall 12, which further improves the reinforcing effect of the reinforcing members 30 on the peripheral wall 12.

A material of the reinforcing member 30 includes, but is not limited to, a metal material, an insulating material, and the like. For example, the reinforcing member 30 disposed on the outer side of the peripheral wall 12 may be made of a metal material, so that the structural strength of the reinforcing member 30 is higher; for another example, the reinforcing member 30 disposed on the inner side of the peripheral wall 12 may be made of an insulating material, or adopt a multilayer structure with a metal part externally covered with an insulating layer, so that the reinforcing member 30 does not cause a short circuit to circuit connections of the battery cells 20 and the like; for another example, the reinforcing member 30 disposed on the inner side of the peripheral wall 12 may also be made of a metal material, and the reinforcing member 30 is spaced apart from charged structures such as the battery cell 20, so that the reinforcing member 30 is less likely to cause a short circuit. The connection mode between the reinforcing member 30 and the peripheral wall 12 includes, but is not limited to, welding, riveting, fastener connection, bonding, and the like.

In some embodiments, as shown in FIG. 2, FIG. 3, and FIG. 5, the peripheral wall 12 includes a plurality of side walls 121 connected end-to-end in sequence. At least one side wall 121 is provided with a functional component 40 and a reinforcing member 30.

The functional component 40 may be a high-voltage connector 41, a low-voltage connector 42, a heat exchange joint, or other components having specific functions and mounted on the side wall 121. The high-voltage connector 41 is configured for electrical connection with the electrical connection portion of the battery cell 20 to realize electrical energy transmission; the low-voltage connector 42 is configured for electrical connection with components such as a signal acquisition assembly; and the heat exchange joint is configured for connection with a heat exchange structure such as heat exchange tube or heat exchange plate to realize the input or output of heat exchange media in the heat exchange structures. The functional component 40 may pass through the side wall 121, or be mounted on the inner side or outer side of the side wall 121.

At least one side wall 121 is provided with the functional component 40 and the reinforcing member 30, which may mean that all reinforcing members 30 are disposed on a same side wall 121 as the functional component 40, or some reinforcing members 30 are disposed on a same side wall 121 as the functional component 40. In embodiments where a plurality of side walls 121 are provided with functional components 40, all side walls 121 provided with the functional components 40 may be provided with reinforcing members 30, or some side walls 121 provided with the functional components 40 may be provided with reinforcing members 30, which are all within the protection scope of this application. The reinforcing member 30 and the functional component 40 on the same side wall 121 may be disposed on the same side or different sides in the inner-outer direction of the side wall 121.

When the battery 100 is subjected to a collision or an external impact, the functional component 40 and a mounting structure of the functional component 40 are easily damaged, and the damage has a great impact on the normal operation of the battery 100. In the above embodiments, with the reinforcing member 30 and the functional component 40 disposed on the same side wall 121, the reinforcing member 30 may be configured to reinforce the structural strength of the side wall 121 near the functional component 40, to reduce the risk of deformation or alleviate deformation of the side wall 121 in this region, and reduce the risk of damage or failure of the functional component 40.

According to the battery 100 in the embodiments of this application, the reinforcing member 30 is disposed on at least one of the side of the peripheral wall 12 facing toward the battery cell 20 and the side facing away from the battery cell 20 to reinforce at least the strength of the peripheral wall 12 near the functional component. This improves the compression resistance of the case 10, especially the compression resistance of the peripheral wall 12, thereby improving the impact resistance of the battery 100.

According to some embodiments of this application, as shown in FIG. 3 and FIG. 4, at least one of an outer peripheral edge of the first case 101 and an outer peripheral edge of the second case 102 is provided with a connection protrusion 13 extending away from the battery cell 20. The reinforcing member 30 includes a first reinforcing member 31 disposed on the side of the peripheral wall 12 facing away from the battery cell 20.

The connection protrusion 13 disposed on the first case 101 may be configured to realize the connection between the first case 101 and other structures, and the connection protrusion 13 disposed on the second case 102 may be configured to realize the connection between the second case 102 and other structures. For example, both the outer peripheral edge of the first case 101 and the outer peripheral edge of the second case 102 are provided with connection protrusions 13, and the connection protrusion 13 of the first case 101 and the connection protrusion 13 of the second case 102 may be connected to each other to realize the connection between the first case 101 and the second case 102.

The connection protrusion 13 may be connected to the first case 101 or the second case 102 by welding, integral formation, or the like. For example, in the example shown in FIG. 3 and FIG. 4, the connection protrusion 13 is a flange, and the flange is integrally formed with the peripheral wall 12 of the second case 102 through sheet metal stamping, which helps improve sealing performance and eliminates the assembly process of the flange and the second case 102, improving reliability of the connection between the flange and the peripheral wall 12.

The first reinforcing member 31 is disposed on the side of the peripheral wall 12 facing away from the battery cells 20, that is, the first reinforcing member 31 and the connection protrusion 13 are located on the same side of the peripheral wall 12. In a direction corresponding to wall thickness of the peripheral wall 12, spaces occupied by the first reinforcing member 31 and the connection protrusion 13 at least partially overlap. Thus, disposing the first reinforcing member 31 does not additionally increase the overall occupied space of the battery 100, or only slightly increases the overall occupied space of the battery 100. In this case, the overall structure of the battery 100 is compact and an envelope space is small.

In some specific embodiments, a height by which the first reinforcing member 31 protrudes from the peripheral wall 12 is less than or equal to a height by which the connection protrusion 13 protrudes from the peripheral wall 12.

In the above embodiments, in a direction corresponding to wall thickness of the peripheral wall 12, the first reinforcing member 31 fully utilizes the height space of the protruding connection protrusion 13 without occupying additional space, so that the overall dimension of the battery 100 before and after disposing the first reinforcing member 31 remains unchanged, which facilitates the application of the battery 100 on electric apparatuses.

For example, L1 is a height by which the connection protrusion 13 disposed on a rear side of the peripheral wall 12 of the second case 102 protrudes backward from a rear surface of the peripheral wall 12, and L2 is a height by which the first reinforcing member 31 disposed on the rear side of the peripheral wall 12 protrudes backward from the rear surface of the peripheral wall 12, where L2 is less than or equal to L1. A space on one side of the connection protrusion 13 along an up-down direction is utilized to dispose the first reinforcing member 31. In a front-rear direction, disposing the first reinforcing member 31 does not increase the overall dimension of the battery 100 in a front-rear direction, and improves the compression resistance of the case 10 without affecting the volume utilization.

In some embodiments of this application, the first reinforcing member 31 defines a first buffer cavity 311; or, as shown in FIG. 4 and FIG. 6, the first reinforcing member 31 cooperates with the peripheral wall 12 to define a first buffer cavity 311.

The first buffer cavity 311 may be a closed cavity or a cavity communicating with the outside. The first reinforcing member 31 defines the first buffer cavity 311 means that the entire cavity wall surface of the first buffer cavity 311 is formed by the wall surface of the first reinforcing member 31; and the cooperation between the first reinforcing member 31 and the peripheral wall 12 defining the first buffer cavity 311 means that part of the cavity wall surface of the first buffer cavity 311 is a wall surface of the first reinforcing member 31, and another part of the wall surface is a wall surface of the peripheral wall 12.

The first buffer cavity 311 refers to a cavity having a buffering effect. When an external force is applied, the space inside the first buffer cavity 311 undergoes certain collapse and deformation.

In the above embodiments, through the collapse and deformation of the first buffer cavity 311, an intensity of continuous transmission of the external force is reduced, thereby reducing damage to the case 10 and components such as the battery cell 20 inside the case 10, and improving the compression resistance of the case 10.

In some embodiments, as shown in FIG. 3 to FIG. 6, the first reinforcing member 31 includes a plurality of first plates 312 and at least one second plate 313. The second plate 313 is spaced apart from the peripheral wall 12 by a specific distance, and at least two side edges of the second plate 313 are connected to the peripheral wall 12 through the first plates 312, to define the first buffer cavity 311 between the second plate 313 and the peripheral wall 12.

The first plates 312 significantly improve the structural strength of the peripheral wall 12, and the second plate 313 significantly improves the buffering effect. A larger quantity of first plates 312 with greater dimensions means better structural reinforcement effect on the peripheral wall 12. A larger quantity of the second plates 313 with larger areas means better buffering effect.

For example, as shown in FIG. 3 and FIG. 4, the second plate 313 is a square plate, and two opposite side edges of the second plate 313 are respectively connected to the peripheral wall 12 through the first plates 312, so that the second plate 313 and the two connected first plates 312 form an n-shaped structure. The structure of the first reinforcing member 31 is simple and easy to process. For another example, as shown in FIG. 5 and FIG. 6, the second plate 313 is a square plate, and three side edges of the second plate 313 are respectively connected to the peripheral wall 12 through the first plates 312. A larger quantity and overall dimension of the first plates 312 means a better effect of improving strength.

The first plates 312 are connected to the second plate 313, so that the first reinforcing member 31 constitutes a structure similar to a cover, and the cover structure is placed over the outside of the peripheral wall 12, so that a space inside the cover structure is formed as the first buffer cavity 311. For example, the first plates 312 and the second plate 313 may be formed by processing plates through processes such as cutting and bending. In the above embodiments, the structure of the first reinforcing member 31 is simple and easy to process, and in this way, the requirements for improving the structural reinforcement effect and the buffering effect are satisfied.

In some specific embodiments, the second plate 313 is provided in plurality, the plurality of second plates 313 are arranged along the circumferential direction of the peripheral wall 12, and edges of the second plate 313 on two sides in the circumferential direction of the peripheral wall 12 are respectively connected to the peripheral wall 12 through the first plates 312.

The plurality of second plates 313 are arranged along the circumferential direction of the peripheral wall 12. For example, a plurality of second plates 313 are disposed on a same side wall 121 of the peripheral wall 12, such as a rear side wall, and the plurality of second plates 313 on the rear side wall are arranged along a left-right direction; for another example, at least two second plates 313 may be disposed on different side walls 121 of the peripheral wall 12, for example, at least one second plate 313 is respectively disposed on a front side wall, a left side wall, a rear side wall, and a right side wall of the peripheral wall 12, so that all second plates 313 are arranged along the circumferential direction of the peripheral wall 12.

In addition, the edges of the second plate 313 on two sides in the circumferential direction of the peripheral wall 12 are respectively connected to the peripheral wall 12 through the first plates 312. For example, a left side edge and a right side edge of the second plate 313 on the rear side wall are respectively connected to the peripheral wall 12 through the first plates 312, and the second plate 313 and the two connected first plates 312 form an n-shaped structure. The first plates 312 corresponding to the plurality of second plates 313 may be arranged along the circumferential direction of the peripheral wall 12.

Thus, distribution of the first reinforcing member 31 in the circumferential direction of the peripheral wall 12 is wider. In addition, the plurality of first plates 312 are arranged along the circumferential direction of the peripheral wall 12, and the plurality of second plates 313 may be arranged along the circumferential direction of the peripheral wall 12, so that the strength along the circumferential direction of the peripheral wall 12 is enhanced in a larger range, and the effect of improving the overall compression resistance of the case 10 is better.

In embodiments where the second plate 313 is provided in plurality, the first reinforcing member 31 may be an integral part, for example, the plurality of second plates 313 may be connected into an entirety through the first plates 312 and other plates, which is easier to process; or the first reinforcing member 31 may include a plurality of separate parts, and each separate part includes at least one second plate 313.

For example, in some embodiments, as shown in FIG. 3 and FIG. 4, the second plate 313 is provided in plurality, the plurality of second plates 313 are arranged along the circumferential direction of the peripheral wall 12, and the first plates 312 on mutually approaching sides of adjacent two second plates 313 are connected through a connection plate 314.

Thus, in the circumferential direction of the peripheral wall 12, two adjacent second plates 313 are connected through a first plate 312, a connection plate 314, and another first plate 312 connected in sequence, forming an integral part. During the processing, a complete sheet plate may be bent multiple times to obtain the connected first plate 312, second plate 313, and connection plate 314, which simplifies the processing and achieves high production efficiency; and the connection plate 314 may be configured to connect with the peripheral wall 12 to increase a connection area between the first reinforcing member 31 and the peripheral wall 12, improving connection reliability.

For example, in other embodiments, the second plate 313 is provided in plurality, the plurality of second plates 313 are spaced apart along the circumferential direction of the peripheral wall 12, the first plates 312 are disposed on two sides of each second plate 313, and the first plates 312 on mutually approaching sides of adjacent two second plates 313 are separated from each other. Thus, each second plate 313 and the corresponding two first plates 312 are formed as an integral part, and the plurality of second plates 313 do not interfere with each other, so that the arrangement and processing are more flexible to satisfy the mounting requirements for mounting spaces with different dimensions on the peripheral wall 12.

In some embodiments of this application, as shown in FIG. 4 and FIG. 6, a side edge of the first plate 312 away from the second plate 313 is provided with a connection plate 314, and the connection plate 314 is connected with the peripheral wall 12 in a manner of surface-to-surface contact.

In other words, the connected connection plate 314, first plate 312, and second plate 313 generally constitute a Z-shaped structure, which enhances strength and provides buffering; and surface-to-surface contact between the connection plate 314 and the peripheral wall 12 increases a connection area to further improve the strength enhancement effect on the peripheral wall 12.

In some embodiments, as shown in FIG. 3 and FIG. 5, the functional component 40 and the reinforcing member 30 are arranged along the circumferential direction of the peripheral wall 12, making full use of the space in the circumferential direction of the peripheral wall 12. For example, a plurality of functional components 40 and a plurality of reinforcing members 30 may be alternately arranged along the circumferential direction of the peripheral wall 12, or a plurality of functional components 40 may be mounted at appropriate positions on the peripheral wall 12 according to functional requirements, and the reinforcing members 30 are disposed based on a dimension of a gap between the functional components 40.

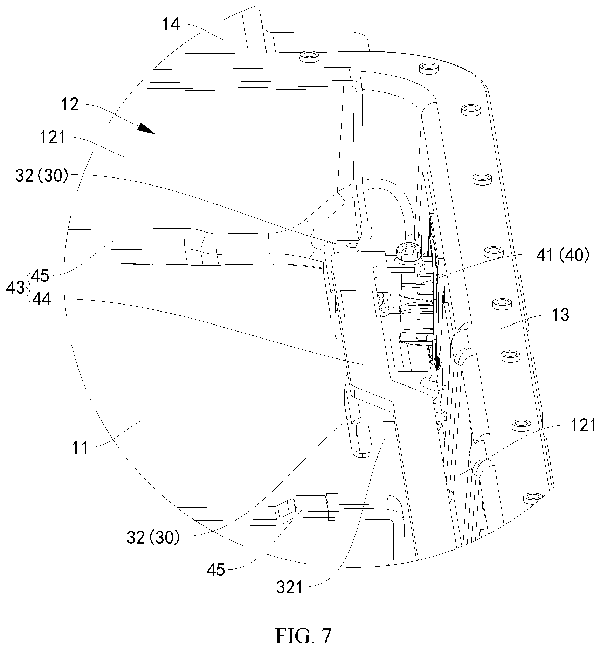

According to some embodiments of this application, as shown in FIG. 7, at least part of the functional component 40 is located inside the case 10. The reinforcing member 30 includes a second reinforcing member 32 disposed inside the case 10. On a same side wall 121, a protruding height of the second reinforcing member 32 is not less than a protruding height of the functional component 40.

At least part of the functional component 40 is located inside the case 10. The functional component 40 may be entirely mounted inside the case 10, or the functional component 40 may pass through the peripheral wall 12 and be partially mounted inside the case 10.

The protruding height of the second reinforcing member 32 refers to a distance between a point of the second reinforcing member 32 farthest from the inner surface of the side wall 121 and the inner surface of the side wall 121 in the thickness direction of the side wall 121. The protruding height of the functional component 40 refers to a distance between a point of the functional component 40 farthest from the inner surface of the side wall 121 and the inner surface of the side wall 121 in the thickness direction of the side wall 121.

The protruding height of the second reinforcing member 32 is not less than the protruding height of the functional component 40. The second reinforcing member 32 is provided, and then a specific safety space is reserved near the functional component 40 inside the case 10. When the peripheral wall 12 is deformed by compression, the second reinforcing member 32 contacts other components inside the case 10 before the functional component 40 does. After the second reinforcing member 32 contacts other components and provides a specific buffer against the compression force, the functional component 40 then contacts other components inside the case 10; or the deformation after buffering is reduced, and then the functional component 40 does not contact and squeeze other components inside the case 10, thereby greatly alleviating the problem of failure of the functional component 40 caused by deformation under direct compression.

In some embodiments, as shown in FIG. 7, the functional component 40 includes a high-voltage connector 41, and the high-voltage connector 41 is disposed on the side wall 121 on a side of the battery cell 20 along a first direction. The high-voltage connector 41 is connected to the battery cell 20 through an electrical connector 43, the electrical connector 43 includes a first connection portion 44 located on a side of the battery cell 20 along the first direction and a second connection portion 45 located on a side of the battery cell 20 along a second direction, where the first direction intersects with the second direction. The first connection portion 44 is connected to the high-voltage connector 41, and the protruding height of the second reinforcing member 32 is not less than a protruding height of the first connection portion 44.

The deformation and damage of the electrical connection structure at the high-voltage connector 41 has a great impact on the safety of the battery 100. With the protruding height of the second reinforcing member 32 not less than the protruding height of the high-voltage connector 41 on the same side wall 121, the second reinforcing member 32 may protect the high-voltage connector 41, so that the high-voltage connector 41 does not directly bear compression and undergo large deformation, reducing the risk of failure.

The electrical connector 43 may be a busbar, a wiring harness, or other components used for conducting electricity. Since the electrical connector 43 includes the first connection portion 44 and the second connection portion 45, the electrical connector 43 may extend to different sides of the battery cell 20, thereby realizing the connection between the battery cell 20 and the high-voltage connector 41 in a wider range inside the case 10.

The first connection portion 44 is located on a side of the battery cell 20 along the first direction, that is, the first connection portion 44 and the high-voltage connector 41 are located on a same side of the battery cell 20 in the first direction, which facilitates the connection between the first connection portion 44 and the high-voltage connector 41.

The protruding height of the first connection portion 44 refers to a distance between a point of the first connection portion 44 farthest from the inner surface of the side wall 121 and the inner surface of the side wall 121 in the thickness direction of the side wall 121. The protruding height of the second reinforcing member 32 is not less than the protruding height of the first connection portion 44, so that when compression deformation occurs, the second reinforcing member 32 contacts other components inside the case 10 before the first connection portion 44 does, and the first connection portion 44 and a connection position between the first connection portion 44 and the high-voltage connector 41 do not directly bear compression, which helps alleviate the problem of failure of the first connection portion 44 and the connection position caused by deformation.

It should be noted that in some embodiments including the high-voltage connector 41, the low-voltage connector 42, and the heat exchange joint, the protruding height of the high-voltage connector 41 is the highest, and the protruding height of the component connected to the high-voltage connector 41 (namely, the first connection portion 44) is the highest. Therefore, when the protruding height of the second reinforcing member 32 is not less than the protruding height of the first connection portion 44, the second reinforcing member 32 also effectively protects the low-voltage connector 42 and its connected component, and the heat exchange joint and its connected component on the same side wall 121.

In some embodiments, as shown in FIG. 7, the second reinforcing member 32 can connect the bottom wall 11 and the peripheral wall 12 to improve the fastening stability of the second reinforcing member 32, so that the second reinforcing member 32 is less likely to misalign and deform under compression, thereby improving the protective effect on the nearby functional component 40.

Moreover, when the second reinforcing member 32 deforms, it is less likely to contact charged components such as the battery cell 20, the high-voltage connector 41, the low-voltage connector 42, and the electrical connector 43, reducing a risk of short circuit. Certainly, the second reinforcing member 32 may also be made of an insulating material, or made of a metal material with a surface covered with an insulating material, so as to reduce the risk of short circuit.

In some embodiments, an expansion beam is disposed inside the case 10, and the second reinforcing member 32 connects the expansion beam and the peripheral wall 12. The expansion beam is configured to partition the space inside the case 10, for example, the battery cell 20 and the second reinforcing member 32 are respectively located on two sides of the expansion beam. Moreover, the expansion beam reinforces the structural strength of the case 10, for example, the expansion beam may be connected to two opposite side walls 121 of the peripheral wall 12, or the expansion beam may be connected to the bottom wall 11 and the peripheral wall 12.

The second reinforcing member 32 is connected to the expansion beam and the peripheral wall 12, to enhance the fastening of the second reinforcing member 32. In this case, the second reinforcing member 32 is not easy to misalign and deform under compression, improving the protective effect on the functional component 40. Even if the second reinforcing member 32 deforms, it is less likely to contact the battery cell 20 under the partitioning effect of the expansion beam, reducing the risk of damage or short circuit of the battery cell 20 due to compression.

In some embodiments, the second reinforcing member 32 defines a second buffer cavity 321, or the second buffer cavity 321 is defined between the second reinforcing member 32 and the case 10.

The second buffer cavity 321 provides specific buffering to improve the compression resistance of the second reinforcing member 32, reduce the transmission of compression force, and improve the protective effect on the functional component 40. Moreover, the second buffer cavity 321 reduces a weight of the second reinforcing member 32. This reduces the overall weight of the battery 100 while impact resistance is provided.

In some specific embodiments, as shown in FIG. 7, the second reinforcing member 32 is bent and extended, and includes three plates connected in sequence, where the three plates are in a Z-shape, a plate at one end is connected with the peripheral wall 12 through contact, a middle plate is opposite to and spaced apart from the bottom wall 11, and a plate at another end is vertically connected to the bottom wall 11, thereby defining the second buffer cavity 321 between the middle plate and the bottom wall 11. In other embodiments, the second reinforcing member 32 may be in a square shape and include four plates connected end-to-end in sequence, where two adjacent plates are respectively connected with the bottom wall 11 and the peripheral wall 12 through contact, and the second reinforcing member 32 defines the second buffer cavity 321. In still other embodiments, the second reinforcing member 32 may be L-shaped and include two plates, one plate is spaced apart from the bottom wall 11 and connected to the peripheral wall 12, the other plate is spaced apart from the peripheral wall 12 and connected to the bottom wall 11, and the second reinforcing member 32 and the case 10 define the second buffer cavity 321.

According to some embodiments of this application, as shown in FIG. 3 and FIG. 5, at least one of the first case 101 and the second case 102 is an integrally stamped sheet metal part. That is, a complete plate is formed into a cover structure or a hollow structure open on one side through sheet metal stamping, which has high production efficiency and low production cost.

The integrally stamped sheet metal part usually has a relatively small thickness. For example, the formed peripheral wall 12 has a relatively small wall thickness and relatively low compression resistance. By disposing the reinforcing member 30 on the peripheral wall 12, the requirements for compression resistance and impact resistance strength of the battery 100 are satisfied while cost is reduced.

In some embodiments, as shown in FIG. 3 and FIG. 5, the peripheral wall 12 is locally deformed toward or away from the battery cell 20 to form a reinforcing rib 122.

That is, in the process of integral sheet metal stamping, the peripheral wall 12 is not a plate extending smoothly along a straight line or an arc, but is locally deformed to form the reinforcing rib 122. The reinforcing rib 122 improves the structural strength of the peripheral wall 12 to a certain extent, balancing high production efficiency, low production cost, and strength requirements of the case 10.

The reinforcing rib 122 may be a strip rib, an annular rib, a cross rib, or the like. The strip rib may extend along an arrangement direction of the first case 101 and the second case 102 (such as the up-down direction), or extend along the circumferential direction of the peripheral wall 12, or the like.

An electric apparatus according to the embodiments of a second aspect of this application includes the battery 100 according to the embodiments of the first aspect of this application, and the battery 100 is configured to provide electrical energy for the electric apparatus. In the battery 100 described above, at least the strength of the peripheral wall 12 near the functional component is reinforced, which improves the compression resistance of the case 10, especially the compression resistance of the peripheral wall 12, thereby improving the impact resistance of the battery 100.

The battery 100 and the vehicle 1000 having the same according to specific embodiments of this application are described below with reference to the drawings.

As shown in FIG. 5 to FIG. 7, the battery 100 according to a specific embodiment of this application includes a case 10, a plurality of battery cells 20, a high-voltage connector 41, a low-voltage connector 42, a heat exchange joint, a first reinforcing member 31, and a second reinforcing member 32. The case 10 includes a first case 101 and a second case 102. The first case 101 is a cover structure with an outer peripheral edge provided with a connection protrusion 13 formed by a sealing flange. The second case 102 is a hollow structure and includes a bottom wall 11 and a peripheral wall 12, and a side edge of an upper end of the peripheral wall 12 is provided with a connection protrusion 13 formed by a sealing flange. The first case 101 fits over the second case 102, and the connection protrusion 13 of the first case 101 and the connection protrusion 13 of the second case 102 are sealingly connected, so that the first case 101 and the second case 102 cooperate to form a sealed accommodating cavity.

The peripheral wall 12 includes a front side wall, a rear side wall, a left side wall, and a right side wall, and lengths of the front side wall and the rear side wall are less than lengths of the left side wall and the right side wall. Mounting members 14 are disposed on outer sides of the left side wall and the right side wall, and the battery 100 is mounted on a body of the vehicle 1000 through the mounting members 14. The high-voltage connector 41, the low-voltage connector 42, and the heat exchange joint pass through the rear side wall. A plurality of battery cells 20 are disposed in the accommodating cavity, and are connected to the high-voltage connector 41 through the electrical connector 43.

The second case 102 is an integrally stamped sheet metal part, the first reinforcing member 31 is disposed on an outer side of the rear side wall, and the second reinforcing member 32 is disposed on an inner side of the rear side wall. Materials of the first reinforcing member 31 and the second reinforcing member 32 may be selected from compression-resistant metal brackets or compression-resistant non-metal brackets according to different requirements for the arrangement of the functional component 40, a dimension of the battery 100, and compression resistance.

The first reinforcing member 31 includes a first plate 312 perpendicular to the rear side wall and a second plate 313 spaced apart from the rear side wall, so that a first buffer cavity 311 is formed between the first reinforcing member 31 and the rear side wall. In a left-right direction, the first reinforcing member 31 is located between the high-voltage connector 41 and the low-voltage connector 42. The first reinforcing member 31 borrows a space below the connection protrusion 13 and converts the space below the connection protrusion 13 into a buffer space, which does not additionally increase an envelope space of the entire battery 100, nor does it affect the volume utilization inside the case 10. Further, it provides buffering or improves the strength of the peripheral wall 12 under compression and impact conditions by distributing a local compression force to a larger surface. In this way, the compression resistance of the case 10 is improved, and deformation caused by compression is reduced.

The second reinforcing member 32 connects the bottom wall 11 and the rear side wall, and the second reinforcing member 32 cooperates with the bottom wall 11 and the rear side wall to define a second buffer cavity 321. The second reinforcing member 32 may be disposed on left and right sides of the functional component 40 such as the high-voltage connector 41. A height by which the second reinforcing member 32 protrudes from the rear side wall is greater than a protruding height of the first connection portion 44 of the electrical connector 43 connected to the high-voltage connector 41, so that the second reinforcing member 32 provides support to a weak region and a safety space is reserved. In this way, deformation and failure of the high-voltage connector 41, the low-voltage connector 42, the heat exchange joint, and the like caused by direct squeeze are prevented.

It should be noted that, provided that no conflict arises, the embodiments in this application and the features in the embodiments may be combined with each other.

The above are only preferred embodiments of this application, and are not used to limit this application. For those skilled in the art, this application may have various modifications and changes. Any modification, equivalent replacement, improvement, and the like made within the spirit and principle of this application shall be included in the protection scope of this application.

## Claims

1. A battery, comprising:
a case, wherein the case comprises a first case and a second case that fit with each other, the first case and/or the second case comprises a bottom wall and a peripheral wall, the peripheral wall is disposed around the bottom wall and connected to the bottom wall, and the peripheral wall comprises a plurality of side walls connected end-to-end in sequence;
a battery cell, wherein the battery cell is disposed inside the case; and
a reinforcing member, wherein the reinforcing member is disposed on a side of the peripheral wall facing toward and/or away from the battery cell, at least one side wall is provided with a functional component and the reinforcing member, and the reinforcing member is connected to at least the peripheral wall and configured to improve strength of the peripheral wall.

2. The battery according to claim 1, wherein a connection protrusion extending away from the battery cell is provided on an outer peripheral edge of the first case and/or an outer peripheral edge of the second case, and the reinforcing member comprises a first reinforcing member disposed on a side of the peripheral wall facing away from the battery cell.

3. The battery according to claim 2, wherein a height by which the first reinforcing member protrudes from the peripheral wall is less than or equal to a height by which the connection protrusion protrudes from the peripheral wall.

4. The battery according to claim 2 or 3, wherein the first reinforcing member defines a first buffer cavity; or the first reinforcing member and the peripheral wall jointly define a first buffer cavity.

5. The battery according to claim 4, wherein the first reinforcing member comprises a plurality of first plates and at least one second plate, the second plate is spaced apart from the peripheral wall by a specific distance, and at least two side edges of the second plate are connected to the peripheral wall through the first plates, to define the first buffer cavity between the second plate and the peripheral wall.

6. The battery according to claim 5, wherein the second plate is provided in plurality, the plurality of second plates are arranged along a circumferential direction of the peripheral wall, and edges of the second plate on two sides in the circumferential direction of the peripheral wall are respectively connected to the peripheral wall through the first plates.

7. The battery according to claim 5, wherein the second plate is provided in plurality, the plurality of second plates are arranged along a circumferential direction of the peripheral wall, and the first plates on mutually approaching sides of two adjacent second plates are connected through a connection plate.

8. The battery according to claim 5 or 6, wherein a side edge of the first plate away from the second plate is provided with a connection plate, and the connection plate is connected with the peripheral wall in a manner of surface-to-surface contact.

9. The battery according to any one of claims 1 to 8, wherein at least part of the functional component is located inside the case, the reinforcing member comprises a second reinforcing member disposed inside the case, and on a same side wall, a protruding height of the second reinforcing member is not less than a protruding height of the functional component.

10. The battery according to claim 9, wherein the functional component comprises a high-voltage connector, and the high-voltage connector is disposed on the side wall on a side of the battery cell along a first direction; and
the high-voltage connector is connected to the battery cell through an electrical connector; the electrical connector comprises a first connection portion located on a side of the battery cell along the first direction and a second connection portion located on a side of the battery cell along a second direction, wherein the first direction intersects with the second direction; the first connection portion is connected to the high-voltage connector; and the protruding height of the second reinforcing member is not less than a protruding height of the first connection portion.

11. The battery according to claim 9 or 10, wherein the second reinforcing member is connected to the bottom wall and the peripheral wall; and/or an expansion beam is disposed inside the case, and the second reinforcing member is connected to the expansion beam and the peripheral wall.

12. The battery according to any one of claims 9 to 11, wherein the second reinforcing member defines a second buffer cavity, or the second buffer cavity is defined between the second reinforcing member and the case.

13. The battery according to any one of claims 1 to 12, wherein the first case and/or the second case is an integrally stamped sheet metal part.

14. The battery according to claim 13, wherein the peripheral wall is locally deformed toward or away from the battery cell to form a reinforcing rib.

15. An electric apparatus, comprising the battery according to any one of claims 1 to 14, wherein the battery is configured to provide electrical energy for the electric apparatus.
